# EUROPEAN PATENT APPLICATION

(11) **EP 2 000 251 A1**
(43) Date of publication of application: **10.12.2008**
(21) Application number: 07301085.2
(22) Date of filing: 05.06.2007
(51) Int. Cl.: B23K 33/00, B21D 3/16, B23P 6/04, F16L 55/16

(54) **Repair welding method for waterwall tubes**

(71) Applicant: Alstom Technology Ltd, 5400 Baden (CH)
(72) Inventor: Nolleau, Dominique, 75015 Paris (FR); Perrotte, Alexis, 94600 Choisy le Roi (FR)
(74) Representative: Gauer, Pierre

(57) **Abstract**

A method for performing repair to a length of water-wall tubing (15) calls for aligning a substitution sleeve (30) in the length; welding an upper internal portion and a lower internal portion of the sleeve to the water-wall tubing (15); placing an upper and a lower element (32) into a respective cutback (31) of the sleeve; and welding an upper external portion and a lower external portion of the sleeve (30) to the respective elements and the water-wall tubing (15) to repair the sleeve. An apparatus is provided.

## Description

### BACKGROUND OF THE INVENTION

### 1. Field of the Invention

The invention disclosed herein relates to combustion systems and, in particular, to repair ofwaterwall tubing.

### 2. Description of the Related Art

Combustion systems make use of a variety of devices for generation of steam and moving that steam. One such combustion system is a boiler. In a furnace of some boilers, is a "waterwall." The waterwall typically lines the walls of the furnace and includes a plurality of tubes that are welded together. During operation, the tubes carry water (i.e., coolant) into the furnace where combustion takes place. The heat of combustion is transferred to the waterwall and steam is generated within the tubes. As one might imagine, in such a harsh environment, the tubes are subject to degradation. Accordingly, system operators conduct periodic inspections of the tubes to ensure efficient operation.

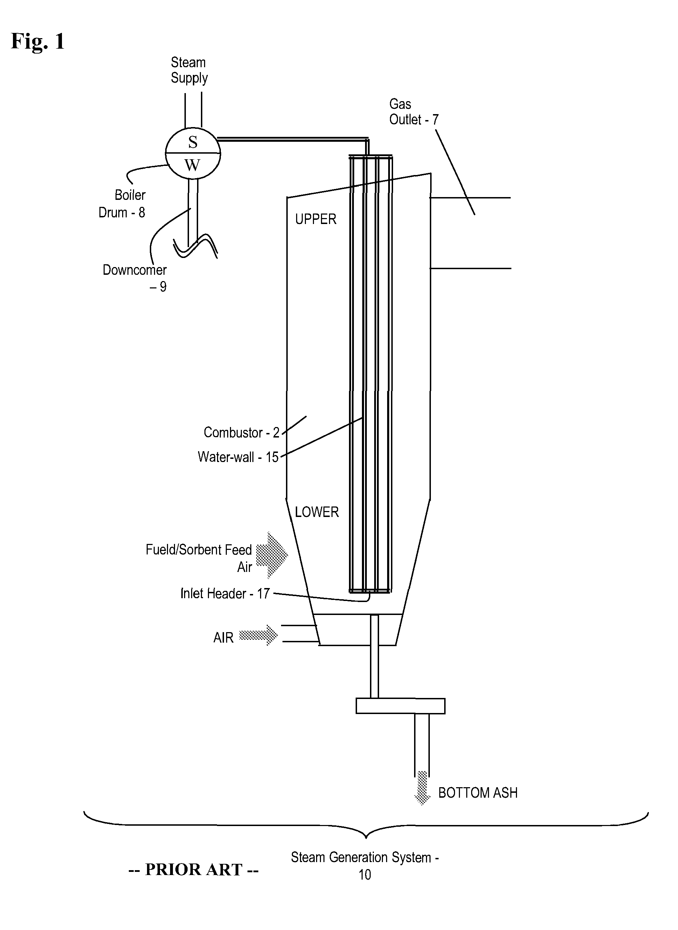

Referring now to FIG. 1, there are shown aspects of an embodiment of a Steam Generation System (SGS) 10. As depicted, the SGS 10 includes a combustor 2 (also referred to as a "boiler" and by other similar terms) as well as various other components. One skilled in the art will recognize that this illustration and description present only a section of a simplified combustion system, and that this example is not limiting of combustion systems.

In operation, crushed fuel (e.g., coal) and sorbent (e.g., limestone) are fed to a lower portion of the combustor 2 as bed material. Primary air is supplied to a bottom portion of the combustor 2 through an air distributor, with secondary air fed through one or more elevations of air ports in a lower portion of the combustor 2.

Combustion takes place throughout the combustor 2, which is filled with the bed material. Flue gas and entrained solids leave the combustor 2 as combustor exhaust through a gas outlet 7.

In typical embodiments, the combustor 2 generally includes two regions. A lower portion and an upper portion. The lower portion of the combustor 2 includes the fuel, a primary air distributor, secondary air ports, fuel feed ports and solids recycle ports. The density of the bed in this region it relatively high on average and typically highest at the elevation of the air distributor. The density then drops off with increasing height of the combustor 2. Physically, the lower portion is usually rectangular, tapered and formed from finned or fusion welded water-wall tubing 15. The lower portion is typically lined with refractory to protect the water-wall tubing 15.

In this simplified illustration, the water-wall tubing 15 is supplied boilerwater (e.g., water, water with certain chemicals, etc,...) by an inlet header 17. The inlet header 17 provides the boilerwater for steam generation in the water-wall tubing 15 of the combustor 2.

The upper portion of the combustor 2 is usually rectangular with vertical walls, where the walls are formed with finned or fusion welded water-wall tubing 15. The upper portion is typically unlined to maximize heat transfer to the water-wall tubing 15. The walls of the combustor 2 are cooled by circulation in the water-wall tubing 15.

Still referring to FIG. 1, the prior art SGS 10 includes a boiler drum 8 which receives steam and moisture from the water-wall tubing 15 (through various components, such as a collection header). The boiler drum 8 provides for separation of water (W) and steam (S).

As one might surmise, having an efficient combustion system calls for including as great a surface area as possible with the water-wall tubing 15. In some embodiments, the surface area of the water-wall tubing 15 is up to about 7,000 square meters (m²).

Typically, inspection of the water-wall tubing 15 is performed about once a year. As one might expect, portions of the water-wall tubing 15 occasionally fail. When this occurs, repair is required. Unfortunately, this is not a simple task. One exemplary repair process is that of sleeve substitution.

Sleeve substitution on water-wall tubing 15 is a long and delicate operation. This process calls for a cooling down period of a few days, and access to each side of the tubing (internal and external of the furnace, for instance), all of which require access to the water-wall tubing 15 with the placement of a scaffold.

Generally to weld water walls there are two welders in operation at the same time, one in the boiler and the other outside. When the space between tubes of the water-wall tubing 15 is very small, it becomes quite impossible to perform a part of the weld (the part between tubes). Accordingly, one must then pull aside one tube, perform welding on the damaged tube and then restore the tube that was pulled aside.

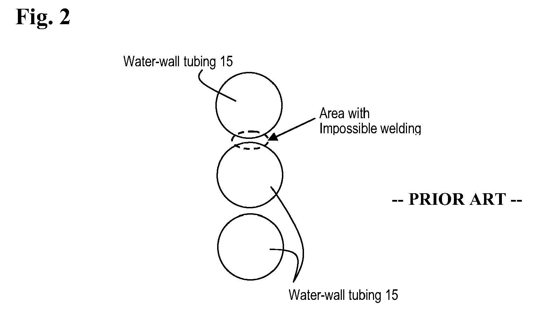

FIG. 2 depicts an area where welding of water-wall tubing 15 has been impossible without disturbing other tubing.

When only one side is accessible, the first attempt is a method referred to as "Open Window." This method falls short because it transforms a weldless tubular element (i.e., the water-wall tubing 15) into an element with a longitudinal weld. The longitudinal weld is not compatible with the requirements of construction codes and rules.

Therefore, what are needed are improved repair techniques for water-wall tubing. Preferably, the techniques provide for reduced labor and time savings.

### BRIEF SUMMARY OF THE INVENTION

Disclosed is a method for performing repair to a length of water-wall tubing, the method including: aligning a substitution sleeve in the length; welding an upper internal portion and a lower internal portion of the sleeve to the water-wall tubing; placing an upper and a lower element into a respective cutback of the sleeve; and welding an upper external portion and a lower external portion of the sleeve to the respective elements and the water-wall tubing to repair the sleeve.

Also disclosed is an apparatus for repairing a length L of water-wall tubing, the apparatus including: a substitution sleeve of the length L including a cutback portion at each end and a cutting element for each cutback, wherein each of the sleeve and the elements are adapted for welding to the water-wall tubing.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:

FIG. 1 depicts aspects of a prior art combustor having water-wall tubing;

FIG. 2 depicts an area within water-wall tubing where welding has not been possible;

FIG. 3 depicts aspects of a damaged tube of the water-wall tubing;

FIG. 4 depicts a substitution sleeve;

FIG. 5 depicts the substitution sleeve in place within a water-wall tube;

FIG. 6 depicts aspects of the substitution sleeve installed into a tube of the water-wall; and

FIG. 7 depicts an exemplary method for repairing water-wall tubing.

### DETAILED DESCRIPTION OF THE INVENTION

Disclosed are methods and apparatus providing for repairing water-wall tubing 15 of a Steam Generation System (SGS) 10. One skilled in the art will recognize that a variety of systems and designs may make use of the water-wall tubing 15. Accordingly, these systems and designs fall within the scope of a SGS 10 as described herein.

As discussed herein, the term "repair" makes reference to performance of a repair task with a resulting installation that meets code, rule and other performance requirements. The teachings herein provide for replacing a portion of water-wall tubing 15 by accessing only one side of the water-wall tubing 15. The repair preserves mechanical characteristics of the tubing. Further, the repair techniques disclosed save time and money as cooling time of the boiler is reduced, thus reducing downtime.

In general, the water-wall tubing 15 includes a plurality of tubes for carrying water (i.e., coolant, which may include water and other chemicals, such as corrosion and erosion inhibitors). The water-wall tubing 15 is disposed along interior portions of a combustion chamber.

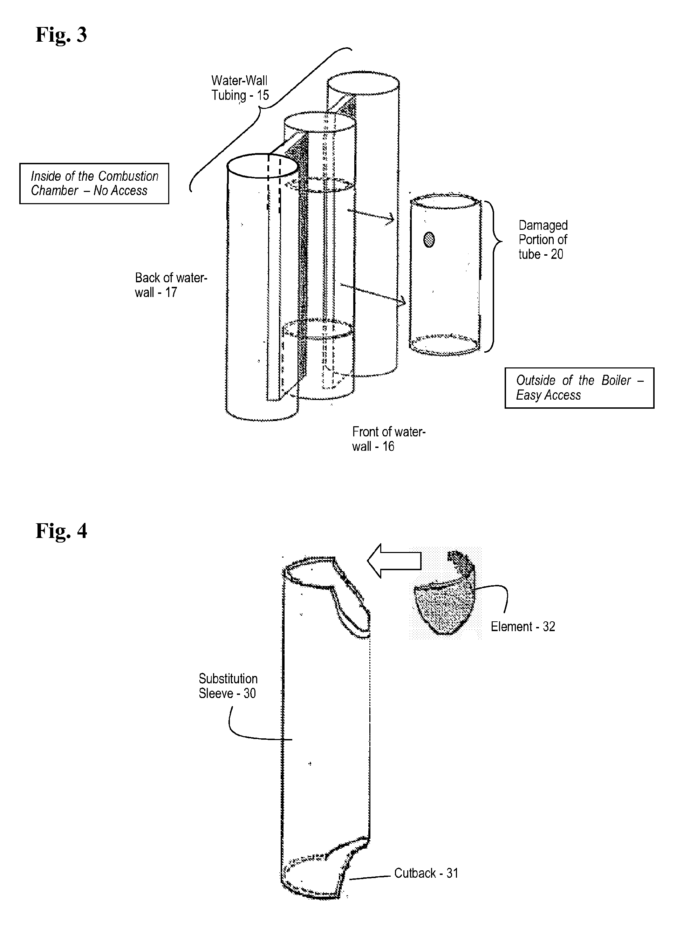

Referring now to FIG. 3, there is shown a portion of the water-wall tubing 15. The water-wall tubing 15 is generally characterized as having a back of the water wall 17 and a front of the water wall 16. When installed, the back of the water wall 17 is inaccessible. That is, some intermediate step, such as cutting through the water-wall tubing 15 must be performed to access the back of the water wall 17. The back of the water wall 17 is generally exposed to the combustion chamber. Typically, the back portion of the water wall tubing 15 is subject to failure due to the harsh environment. As shown in FIG. 3, a portion of a damaged tube 20 has been removed from the water-wall tubing 15. In this example, the portion of the damaged tube 20 includes a perforation. Repair of the perforation first calls for removing the portion of damaged tube 20 by conventional techniques such as with a cutting torch, a grinder and other such devices. Next, a replacement is inserted. An exemplary replacement is shown in FIG. 4.

In FIG. 4, aspects of an exemplary substitution sleeve 30 are shown. The substitution sleeve 30 is typically formed of material that is similar to material of the water-wall tubing 15 and is of a similar thickness. Of course, variations and improvements to materials and dimensions may be used as determined appropriate. The substitution sleeve 30 is typically of the same length as the portion of damaged tube 20, such that the substitution sleeve 30 may be welded in place of the portion of damaged tube 20. The term "similar" as used in this regard, is related to material or dimensions that of a similar appearance, availability, cost, durability, longevity, or other such aspects of the water-wall tubing 15.

Generally, the substitution sleeve 30 includes an upper and a lower cutback 31. The cutback 31 provides an access way for subsequent internal welding. An element 32 is generally provided with the substitution sleeve 30 for each of the upper and the lower cutback 31. Each element 32 serves as filler material for subsequent external welding.

The element 32 may be adapted as necessary. That is, for each element 32, aspects such as a shape, size, material, mounting features (e.g., weld points) and other such aspects may be adapted as necessary. In each embodiment, the element 32 includes a design that never requires longitudinal welding for installation.

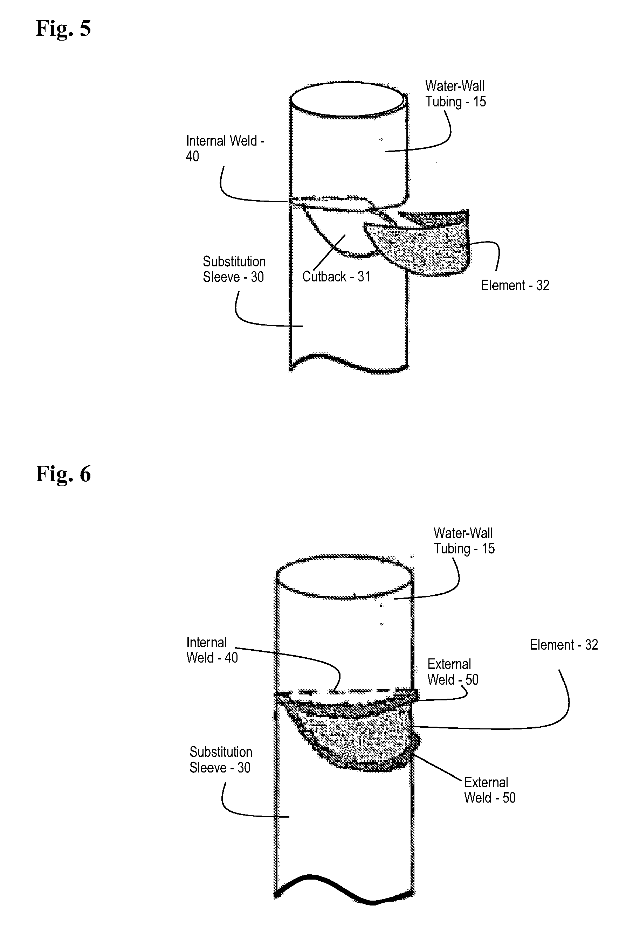

In FIG. 5, the substitution sleeve 30 is disposed in line with the damaged water-wall tubing 15. Once aligned, an internal weld 40 is formed by a welding procedure. Advantageously, the cutback 31 provides room and accessibility for tooling for the welding procedure. Once the internal weld 40 is in place, the upper and lower elements 32 are set and an external weld 50 is performed.

As shown in FIG. 6, the element 32 is installed into the water-wall tubing 15. Each element 32 provides an adequate supply of material necessary for filling the cutback 31 once welded into place. As shown in FIG. 5, the element 32 is surrounded by an external weld 50. Once the internal weld 40 and the external weld 50 are in place (for the upper and lower portion of the substitution sleeve 30), the water-wall tubing 15 may be subjected to inspection or considered repaired.

Accordingly, repair personnel are provided with an apparatus that provides for expedient repair of the damaged water-wall tubing 15. The apparatus typically includes the substitution sleeve 30 and two elements 32. In some embodiments, separate elements 32 are provided. That is, elements 32 which are not cut from the length L. Typically, separate elements include additional material or other features as may be useful to welders placing each element 32.

As used herein, it is considered that the apparatus is useful for repair of water-wall technology implemented in most any embodiment of a combustor 2, combustion chamber, heat exchanger or other similar device.

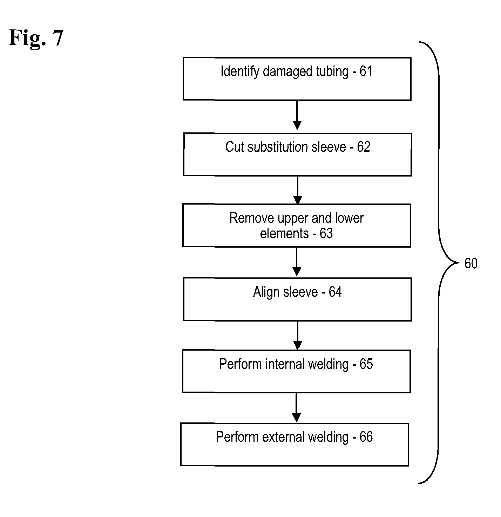

In some embodiments, repair personnel make the substitution sleeve 30, the cutback 31 and the element 32 in the field from blank stock. That is, a section of material is available to the personnel. Once an extent of the damaged portion of tubing 20 is determined, the personnel cut appropriately sized materials. Accordingly, FIG. 7 depicts an exemplary method for performing a repair.

In FIG. 7, an exemplary repair method 60 is provided. In a first step 61, repair personnel identify and remove a length L of damaged tubing. In a second step 62, the personnel cut a substitution sleeve 30 of length L. In a third step 63, upper and lower elements 32 are removed from the substitution sleeve 30. In a fourth step 64, the substitution sleeve is aligned in a blank section of the water-wall tubing 15 (that is, a section where the damaged portion has been removed). In fifth step 65, personnel perform internal welding to provide the interior weld 40 which couples the substitution sleeve 30 to the back of the water-wall tubing 15. In a sixth step 66, the upper and lower elements 32 are placed and external welding is performed to provide the external weld 50. Once the external weld 50 is completed, the water-wall is repaired (or sealed). Of course, some of these steps may be omitted, performed out of order, added to, or otherwise modified for performing a repair.

In short, the teachings herein provide for performing welding on a damaged water-wall tube without the required rearrangement of tubes in a water wall as previously required. Although the description herein makes reference to specific types of boilers, the teachings may be used on all types of boilers, and further, these may be used to weld any tubular product.

While the invention has been described with reference to exemplary embodiments, it will be understood by those skilled in the art that various changes may be made and equivalents may be substituted for elements thereof without departing from the scope of the invention. In addition, many modifications will be appreciated by those skilled in the art to adapt a particular instrument, situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for performing repair to a length of water-wall tubing, the method comprising:
aligning a substitution sleeve in the length;
welding an upper internal portion and a lower internal portion of the sleeve to the water-wall tubing;
placing an upper and a lower element into a respective cutback of the sleeve; and
welding an upper external portion and a lower external portion of the sleeve to the respective elements and the water-wall tubing to repair the sleeve.

2. The method as in claim 1, further comprising cutting the sleeve to the length from stock material.

3. The method as in claim 2, further comprising cutting elements from the sleeve.

4. The method as in claim 1, further comprising removing the length of water-wall tubing.

5. An apparatus for repairing a length L of water-wall tubing, with the method according to one of the preceding claims, the apparatus comprising:
a substitution sleeve of the length L comprising a cutback portion at each end and a cutting element for each cutback, wherein each of the sleeve and the elements are adapted for welding to the water-wall tubing.

6. The apparatus as in claim 5, wherein material of at least one of the sleeve and each element is similar to material of the water-wall tubing.

7. The apparatus as in claim 5, wherein a thickness of at least one of the sleeve and each element is similar to the thickness of the water-wall tubing.

## Amended claims

### Amended claims in accordance with Rule 137(2) EPC.

**1.** A method for performing repair to a length of water-wall tubing, the method comprising:
removing a portion of the length of water-wall tubing;
cutting a substitution sleeve having a length approximately equal to the removed portion;
cutting an upper element from an upper end of the substitution sleeve and a lower element from a lower end of the substitution sleeve to form upper and lower cutbacks at the upper and lower ends of the substitution sleeve, respectively, the upper and lower cutbacks being arcuate in shape and having no edges aligned with the longitudinal axis of the substitution sleeve;
welding an upper internal portion and a lower internal portion of the substitution sleeve to the water-wall tubing through the upper and lower cutbacks, respectively;
placing the upper element into the upper cutback and placing a lower element into the lower cutback; and
welding an upper external portion and a lower external portion of the sleeve to the respective upper and lower elements and the water-wall tubing to repair the sleeve, wherein the arcuate shape of the upper and lower cutbacks eliminate the need to perform any welding in a direction parallel to the longitudinal axis of the water-wall tubing.
